# EUROPÄISCHE PATENTANMELDUNG

(11) **EP 3 073 457 A1**
(43) Veröffentlichungstag der Anmeldung: **28.09.2016**
(21) Anmeldenummer: 16160586.0
(22) Anmeldetag: 16.03.2016
(51) Int. Cl.: G08B 21/06, B60K 28/06, B60W 40/09, B60W 40/08

(54) **STEUEREINRICHTUNG FÜR EIN KRAFTFFAHRZEUG UND FAHRERINFORMATIONSVERFAHREN**

(30) Priorität: 23.03.2015 DE 102015205158
(71) Anmelder: ROBERT BOSCH GMBH, 70442 Stuttgart (DE)
(72) Erfinder: Turck, Matthias, 45470 Mühlheim an der Ruhr (DE); Erichsen, Malte, 60598 Frankfurt Am Main (DE); Klauser, Maik, 60433 Frankfurt/Main (DE)

(57) **Zusammenfassung**

Die Erfindung betrifft eine Steuereinrichtung (2) für ein Fahrzeug (1) mit einer Schnittstelle (3) zu wenigstens einem Sensor (6, 7) des Fahrzeugs (1) zur Ermittlung von Fahrzeugdaten, mit einer Auswerteeinrichtung (5) zur Auswertung von von dem Sensor (6, 7, 14) erfassten Fahrzeugdaten zur Bestimmung einer Gefahrensituation des Fahrzeugs (1) und mit einer Schnittstelle (9) zu einer Ausgabeeinheit (10, 12) zur Ausgabe einer auf die Gefahrensituation bezogenen Warnung, gekennzeichnet durch eine Schnittstelle (17) zu einer ersten Kommunikationseinrichtung (18) im Fahrzeug (1) zum Aufbau einer drahtlosen Kommunikationsverbindung (19) zu einer zweiten Kommunikationseinrichtung (20) außerhalb des Fahrzeugs (1) für den Fall, dass nach einer vorgegebenen Zeit nach Ausgabe der auf die Gefahrensituation bezogenen Warnung ein Fortbestehen der Gefahrensituation von der Auswerteeinrichtung erfasst wird.

## Beschreibung

### Stand der Technik

Aus der US 5,585,785A ist eine Alarmvorrichtung bekannt, bei der ein Drucksensor auf einem Lenkrad den Druck eines Fahrers auf das Lenkrad feststellt. Fällt der festgestellte Druck auf das Lenkrad unter eine vorgegebene Grenze, so wird ein Alarm ausgegeben.

Aus der DE 103 43 485 A1 ist eine Funktelefoneinrichtung in Kraftfahrzeugen und ein Verfahren zur Herstellung einer Kommunikationsverbindung hierzu bekannt. Hierbei wird ein Funkruf mit Profilanforderungsdaten eines rufenden Teilnehmers ausgesendet, die ausgesendeten Profilanforderungsdaten werden durch mindestens einen den Funkruf empfangendes Funktelefon mit für den Teilnehmer des empfangenden Funktelefons abgespeicherten Profildaten verglichen und für den Falle einer Übereinstimmung der Profildaten wird eine Funkverbindung zwischen rufendem und signalisierendem Funktelefon aufgebaut. Hierdurch kann insbesondere bei langen Nachtfahrten ein Fahrer auf einfache Weise einen Gesprächspartner finden, mit dem er verbal kommunizieren kann.

### Offenbarung der Erfindung

### Vorteile der Erfindung

Eine Steuereinrichtung für ein Kraftfahrzeug mit den Merkmalen des Hauptanspruchs hat demgegenüber den Vorteil, dass über eine Schnittstelle zu wenigstens einem Sensor des Kraftfahrzeugs Fahrzeugdaten ermittelt werden, wobei die Fahrzeugdaten von einer Auswerteeinrichtung zur Bestimmung einer Gefahrensituation des Fahrzeugs ausgewertet werden und bei einem Vorliegen einer Gefahrensituation eine Warnung an einen Fahrer ausgegeben wird. Besteht die Gefahrensituation nunmehr fort, beispielsweise weil der Fahrer auf die Warnung nicht reagiert hat, so wird nach einer vorgegebenen Zeit eine Kommunikationsverbindung zwischen einer ersten Kommunikationseinrichtung in dem Fahrzeug und einer zweiten Kommunikationseinrichtung außerhalb des Fahrzeugs, beispielsweise in einer Dienstzentrale, aufgebaut. Hierdurch wird es ermöglicht, dass der Fahrer über die aufgebaute Kommunikationsverbindung persönlich angesprochen wird, insbesondere von einer menschlichen Person, wenn der Fahrer auf eine ihm angezeigte Gefahrensituation im Fahrzeug nicht reagiert. Durch eine persönliche Ansprache im Vergleich zu einer Ausgabe einer Warnung beispielsweise durch ein dargestelltes Symbol oder einer akustische Ausgabe eines Warntons, kann eine wirksamere Ansprache und Bewusstseinsschaffung beim Fahrer erreicht werden. Durch die persönliche Ansprache wird der Fahrer gehaltener sein, auf die Warnung zu reagieren, dem Verhalten oder dem Ereignis, das Ursache für die Warnung ist entgegenzuwirken und somit sicherer zu fahren. Somit wird auch auf einfache Weise die Fahrsicherheit für den Fahrer erhöht.

Durch die in den abhängigen Ansprüchen aufgeführten Maßnahmen sind vorteilhafte Weiterbildungen und Verbesserungen der in den unabhängigen Ansprüchen angegebenen Steuereinrichtung möglich. So ist es vorteilhaft, eine Ortungseinrichtung zur Feststellung einer aktuellen Position des Fahrzeugs vorzusehen. Hierdurch kann ein Teilnehmer an der zweiten Kommunikationseinheit des Fahrzeugs bei einer entsprechenden Datenabfrage feststellen, wo sich das Fahrzeug befindet. Sollte der Fahrer tatsächlich in erheblichen Schwierigkeiten sein, kann durch eine Übermittlung der festgestellten Position des Fahrzeugs auf einfache Weise Hilfe zu dieser Position angefordert werden.

Eine Fahrerinformationseinrichtung gemäß den Merkmalen des nebengeordneten Anspruchs weist wenigstens einen Sensor zur Bestimmung der Gefahrensituation auf. Dieser Sensor kann auf verschiedene Weise ausgeführt sein. Ein Drehratensensor hat z.B. den Vorteil, eine seitliche Drift oder ein Schleudern des Fahrzeugs festzustellen. Gelangt das Fahrzeug in eine instabile Lage, so kann dies leicht festgestellt werden.

Ferner ist vorteilhaft, einen Geschwindigkeitssensor vorzusehen. Insbesondere durch einen Vergleich mit einer beispielsweise in einer digitalen Karte vorgehaltenen Höchstgeschwindigkeit für eine Position des Fahrzeugs kann eine Geschwindigkeitsüberschreitung festgestellt und der Fahrer vor dieser Geschwindigkeitsüberschreitung gewarnt werden.

Weiterhin ist ein Sensor zur Müdigkeitserfassung des Fahrers von Vorteil. Wenn nämlich festgestellt wird, dass der Fahrer ermüdet ist, kann eine Ansprache des Fahrers dazu beitragen, dass er entweder zeitnah nach der Ansprache tatsächlich eine Pause einlegt oder dass er zumindest durch das Gespräch wieder aufmerksamer wird. Zur Müdigkeitsüberwachung können auch mehere Sensoren gemeinsam ausgewertet werden. So ist beispielsweise vorteilhaft eine Kamera vorgesehen, die den Fahrer, insbesondere eine Augenöffnung des Fahrers, erfasst und gegebenenfalls auch auswertet. Eine Spurverlassenswarneinrichtung kann alternativ oder ergänzend ein Verlassen einer gewählten Fahrspur durch das Fahrzeug feststellen und somit einen Rückschluss auf die Müdigkeit des Fahrers geben. Denn insbesondere bei einem häufig hintereinander auftretenden Spurverlassen ist es wahrscheinlich, dass der Fahrer stark ermüdet ist.

Ferner kann auch eine Messeinrichtung vorgesehen sein, mit der ein Drogenkonsum eines Fahrers festgestellt wird, beispielsweise eine Atemalkoholmesseinrichtung. Wird festgestellt, dass der Fahrer nach Benutzung der Messeinrichtung alkoholisiert fährt, kann zunächst eine Warnung ausgegeben werden, während im Anschluss die Kommunikationsverbindung aufgebaut wird, um den Fahrer von einer Benutzung des Fahrzeugs möglichst abzuhalten.

Entsprechende Vorteile ergeben sich für ein Verfahren mit den Merkmalen des nebengeordneten Anspruchs.
Besonders vorteilhaft ist es, eine Benutzung einer gesperrten Fahrspur zu erfassen. Hierunter ist auch die Benutzung einer Fahrspur entgegen einer vorgegeben Fahrtrichtung zu verstehen. Sollte also beispielsweise festgestellt werden, dass ein Fahrstreifen für längere Zeit benutzt wird, der gesperrt ist, oder dass ein Fahrer entgegen einer vorgeschriebenen Fahrtrichtung in eine Straße einfährt (sogenannter Geisterfahrer), so kann für den Fall, dass der Fahrer eine Warnanzeige ignoriert über die aufgebaute Kommunikationsverbindung eine direkte Ansprache des Fahrers erfolgen und gegebenenfalls eine zuständige Behörde informiert werden.

Es ist vorteilhaft, dass eine Sprachverbindung zwischen dem Fahrer und einer Person außerhalb des Fahrzeugs aufgebaut wird, da über eine persönliche Ansprache durch einen Menschen schnell auf eine aktuelle Situation reagiert werden kann.

Weiterhin ist es voreilhaft, dass die von dem Sensor gemessenen Daten oder ein Ergebnis einer Auswertung der von dem Sensor gemessenen Fahrzeugdaten an eine Zentraleinheit außerhalb des Fahrzeugs übertragen werden. Hierdurch kann eine Auswerterechner oder eine Person, die über die Kommunikationsverbindung mit dem Fahrer in Kontakt tritt, unter Berücksichtigung der Daten eine genauere Ansprache des Fahrers vornehmen bzw. auf eine aktuelle Gefahrensituation des Fahrers reagieren und entsprechende Hinweise zur Beseitigung der Gefahr geben.

Weiterhin ist es vorteilhaft, dass die empfangenen Daten von einer Zentraleinheit an eine weitere Einheit oder an weitere Empfänger übertragen werden, zum Beispiel an einen Besitzer des Fahrzeugs. Hierdurch ist es möglich, dass Gefahrensituationen, in die das Fahrzeug geraten ist und ein mögliches Fehlverhalten des Fahrers gezielt ausgewertet werden kann.

Es ist ferner vorteilhaft, Daten für eine Auswertung der Gefahrensituation von einer Zentraleinheit an das Fahrzeug zu übertragen. Hierdurch ist es beispielsweise möglich, dass im Fall einer Fehlfunktion eines Sensors oder bei einer besonderen Straßensituation durch eine angepasste Festlegung von Grenzwerten eine Ausgabe von Warnungen unterbunden wird, so dass ein Fahrer nicht durch Warnungen gestört wird, die keine Gefahr für das Fahrzeug bedeuten.

### Kurze Beschreibung der Zeichnungen

Ausführungsbeispiele sind in den Zeichnungen dargestellt und in der nachfolgenden Beschreibung näher erläutert.

Es zeigen:
- Figur 1: ein erstes Ausführungsbeispiel für eine Steuereinrichtung für ein Kraftfahrzeug,
- Figur 2: ein Ausführungsbeispiel für einen Verfahrensablauf eines Fahrerinformationsverfahrens.

### Ausführungsformen der Erfindung

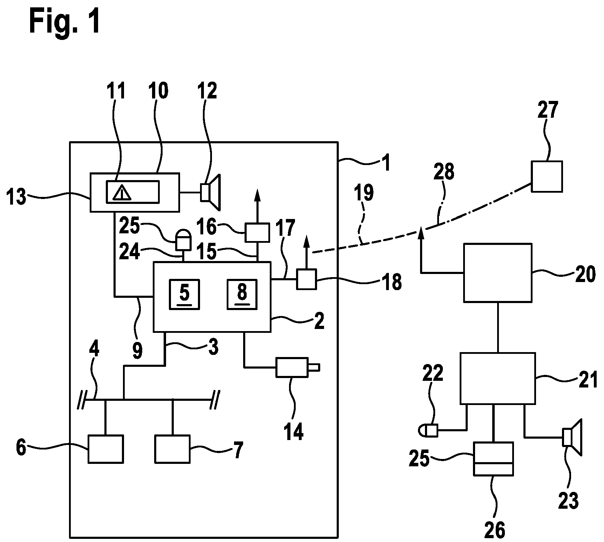

In der Figur 1 ist ein Kraftfahrzeug 1 dargestellt, das eine Steuereinrichtung 2 zur Fahrerinformation aufweist. Die Steuereinrichtung 2 weist in der hier dargestellten Ausführungsform eine Schnittstelle 3 zu einem Fahrzeugdatenbus 4 auf. An den Fahrzeugdatenbus 4 sind verschiedene Messeinrichtungen und Sensoren des Fahrzeugs 1 angeschlossen. Eine Recheneinheit 5 der Steuereinrichtung 2 bildet eine Auswerteeinrichtung, die die von den Sensoren gemessenen Messwerte während eines Fahrbetriebs des Fahrzeugs 1 auswertet. So ist beispielsweise ein Lenkwinkelsensor 6 und ein Geschwindigkeitssensor 7 an den Fahrzeugdatenbus 4 angeschlossen. Weitere Sensoren können an die Recheneinheit 5 oder den Fahrzeugdatenbus 4 angeschlossen sein.

Die gemessenen Sensordaten werden von der Recheneinheit 5 mit in einem Speicher 8 abgelegten Datenprofil und festgelegten Grenzwerten verglichen. Dabei ist es möglich, die Daten eines Sensors alleine auszuwerten oder die Daten mehrerer Sensoren gemeinsam auszuwerten. Bewegt sich das Fahrzeug 1 beispielsweise in einem Gebiet mit einer definierten Fahrzeughöchstgeschwindigkeit von 120 km/h, so wird bei einer Überschreitung der vorgegebenen Höchstgeschwindigkeit von 120 km/h eine Warnung ausgegeben. In diesem Fall wird eine Gefahrensituation des Fahrzeugs festgestellt, da die vorgegebene Höchstgeschwindigkeit überschritten wurde. Es kann auch ein abweichender Grenzwert festgelegt werden, der beispielsweise 10 km/h über der vorgegebenen Höchstgeschwindigkeit liegt.

Die Steuereinrichtung 2 weist eine Schnittstelle 9 auf, an die eine Ausgabeeinheit 10 angeschlossen ist. Die Ausgabeeinheit 10 weist beispielsweise eine Anzeige 11 und/oder eine akustische Ausgabeeinheit 12 auf, beispielsweise einen Lautsprecher. Wird eine Gefahrensituation des Fahrzeugs festgestellt, so wird in der Anzeige 11 ein Warnsymbol 13 dargestellt, und/oder es wird ein akustisches Warnsignal über den Lautsprecher 12 ausgegeben. Ferner ist es auch möglich, dass dem Fahrer eine Warnung haptisch, beispielsweise durch eine Rüttelbewegung des Lenkrades, ausgegeben wird.

In einer anderen Ausführungsform kann beispielsweise auch der Lenkwinkelsensor 6 ausgewertet werden. Wird beispielsweise festgestellt, dass der Fahrer recht häufig die Fahrtrichtung des Fahrzeugs leicht korrigieren muss, so kann davon ausgegangen werden, dass der Fahrer sehr müde ist und daher unsicher fährt. Auch in diesem Fall kann entsprechend eine Warnung ausgegeben werden. Zur Müdigkeitserkennung können alternativ oder ergänzend aber auch beispielsweise eine Berührung des Lenkrades oder eine Kopfhaltung des Fahrers ausgewertet werden.

Insbesondere ist in einer Ausführungsform zur Müdigkeitserkennung eine Kamera 14 mit der Steuereinrichtung 2 verbunden. Die Kamera 14 beobachtet den Fahrer des Fahrzeugs. Wird festgestellt, dass die Augen des Fahrers geschlossen sind, wird davon ausgegangen, dass der Fahrer schläft, und es wird eine entsprechende Warnung ausgegeben. Ferner kann auch anhand einer Auswertung einer Augenbewegung darauf geschlossen werden, dass der Fahrer ermüdet ist. Zur Müdigkeitserkennung kann alternativ oder ergänzend beispielsweise ein Spurverlassen ausgewertet werden. Für die Berücksichtigung einer Müdigkeit des Fahrers kann beispielsweise auch eine Uhrzeit oder eine festgestellte Dauer einer Fahrt ausgewertet werden.

Zur Feststellung einer Gefahrensituation kann auch eine Messeinrichtung zur Bestimmung eines Drogenkonsums des Fahrers an die Steuereinrichtung 2 angeschlossen sein. Bei einem Start des Kraftfahrzeugs 1 ist beispielsweise in einer Ausführungsform diese Messeinrichtung obligatorisch zu benutzen. Wird im Nachgang festgestellt, dass der Fahrer Drogen konsumiert hat, beispielsweise Alkohol über ein vorgegebenes Maß, so wird eine Warnung an den Fahrer über die Ausgabeeinheit ausgegeben.

In einer weiteren Ausführungsform weist die Steuereinrichtung 2 eine Schnittstelle 15 zu einer Ortungseinheit 16 auf. Über die Ortungseinheit 16 kann eine Position des Kraftfahrzeugs 1, insbesondere eine Position des Kraftfahrzeugs 1 in einem Straßennetz festgestellt werden. In einer weiteren Ausführungsform ist es auch über eine Auswertung des zeitlichen Verlaufs der Position des Fahrzeugs möglich, eine Bewegung des Fahrzeugs festzustellen. Bei einer hinreichenden Auflösung ist es damit beispielsweise möglich, festzustellen, ob sich ein Fahrzeug in einer gesperrten Straße bewegt oder ob ein Fahrzeug sich entgegen einer vorgeschriebenen Fahrtrichtung auf einer Straße bewegt. Auch in diesem Fall liegt eine Gefahrensituation für das Kraftfahrzeug vor.

Hat nun die Recheneinheit 5 der Steuereinrichtung 2 eine Gefahrensituation durch die Auswertung der Messdaten wenigstens der an die Schnittstelle 3 der Steuereinrichtung 2 angeschlossenen Sensoren festgestellt, so wird eine Warnung über die Ausgabeeinheit 10 an den Fahrer ausgegeben. Im folgenden verfolgt die Steuereinrichtung 2, ob die Gefahrensituation, die die Steuereinrichtung 2 ermittelt hat, weiter fortbesteht. Besteht die Gefahrensituation nach einer vorgegebenen Zeit noch fort, so wird über eine Schnittstelle 17 eine erste Kommunikationseinrichtung 18 in dem Kraftfahrzeug 1 aktiviert. Die vorgegebenen Zeitschwellen können dabei für verschiedene Gefahrensituationen unterschiedlich sein. Wird beispielsweise eine Ermüdung eines Fahrers festgestellt, so erfolgt der Aufbau einer Kommunikationsverbindung erst, wenn eine Müdigkeit des Fahrers für wenigstens zwei Minuten festgestellt wird. Wird dagegen festgestellt, dass sich das Fahrzeug entgegen einer vorgeschriebenen Fahrtrichtung auf einer Straße bewegt, so erfolgt bereits beispielsweise 10 Sekunden nach einer Ausgabe einer Warnung an den Fahrer und bei fortbestehen der Gefahrensituation ein Aufbau einer Kommunikationsverbindung.

Vorzugsweise ist in der ersten Kommunikationseinrichtung 18, die beispielsweise als ein Mobiltelefon ausgeführt ist, ein vorgegebener Anschluss eines weiteren Teilnehmers an ein Kommunikationsnetz abgelegt. Dies kann beispielsweise eine Telefonnummer oder eine IP-Adresse sein. Die Kommunikationseinrichtung baut eine erste Kommunikationsverbindung 19 zu einer zweiten Kommunikationseinrichtung 20 mit der gespeicherten Adresse auf, die sich außerhalb des Kraftfahrzeugs 1 befindet. Bevorzugt ist die zweite Kommunikationseinrichtung 20 in einer Dienstezentrale fernab des Kraftfahrzeugs 1 untergebracht. In einer Ausführungsform werden über die erste Kommunikationsverbindung 19 Daten über die Identität des Kraftfahrzeugs 1 übertragen. Ferner erfolgt in einer Ausführungsform auch eine Übertragung der von den Sensoren des Kraftfahrzeugs 1 gemessenen Daten und/oder eine Auswertung der Gefahrensituation. In einer ersten Ausführungsform wertet die zweite Kommunikationseinrichtung 20 die übermittelten Informationen aus. Bei der Auswertung kann auch ein Fehlerzustand des Kraftfahrzeugs berücksichtigt werden, beispielsweise eine Störung einer der Sensoren.

Nun überträgt die zweite Kommunikationseinrichtung 20 vorzugsweise über die erste Kommunikationsverbindung 19 weitere Daten an die erste Kommunikationseinrichtung 18. Diese Daten sind beispielsweise Sprachdaten, die nach der Übertragung über die Ausgabeeinheit 10 und/oder den Lautsprecher 12 im Fahrzeug 1 ausgegeben werden. Ergänzend ist es auch möglich, z.B. ein Diagnoseprogramm zur Überprüfung von Fahrzeugfunktionen oder von Sensoren im Fahrzeug zu übertragen.

In einer anderen Ausführungsform wird eine Sprachverbindung, insbesondere eine bidirektionale Sprachverbindung, von einer Person in der Dienstezentrale zu einem Fahrer des Fahrzeugs hergestellt. Hierzu verbindet die zweite Kommunikationseinrichtung 20 eine Mensch-Maschine-Schnittstelle 21 in einem Zugriffsbereich einer Dienstezentrale außerhalb des Kraftfahrzeugs über die erste Kommunikationsverbindung 19 mit der Steuereinrichtung 2. Über ein Mikrophon 22 und einen Lautsprecher 23 kann nun ein Teilnehmer an der Kommunikationsschnittstelle 21 mit dem Fahrer des Kraftfahrzeugs 1 eine Sprachverbindung aufnehmen und sich mit ihm unterhalten. Damit sich auch der Fahrer des Kraftfahrzeugs 1 äußern kann, ist in einer Ausführungsform an eine Schnittstelle 24 der Steuereinrichtung 2 ein Mikrophon 22 angeschlossen, über das Audioinformationen, insbesondere Sprachinformationen, aus dem Innern des Kraftfahrzeugs 1 über die erste Kommunikationsverbindung an die Schnittstelle 21 übertragen werden können. Ergänzend können einer sich an der Schnittstelle 21 befindlichen Person in einer Anzeige 25 Daten des Kraftfahrzeugs 1, insbesondere Daten über die Gefahrensituation, dargestellt werden. Eine sich an der Schnittstelle 21 befindende Person kann nun unter Berücksichtigung der Gefahrensituation gezielt eine Kommunikation mit dem Fahrer des Kraftfahrzeugs 1 aufnehmen. Beispielsweise kann sie ihm Hinweise geben, wie der Fahrer mit der Gefahrensituation umgehen sollte. Sollte der Fahrer des Kraftfahrzeugs eine Straße entgegen einer vorgeschriebenen Richtung fahren, so kann ihm beispielsweise der Rat gegeben werden können, das Fahrzeug abzustellen und auf Hilfe zu warten. Wird beispielsweise auch die Position des Kraftfahrzeugs 1 übertragen, so kann eine Person an der Schnittstelle 21 nunmehr auch eine solche Hilfe organisieren, z.B.. durch eine Benachrichtigung eines Pannendienstes, eines Rettungsdienstes oder der Polizei.

Wird festgestellt, dass der Fahrer ermüdet ist, kann eine Diskussion mit dem Fahrer begonnen werden. Hierdurch kann eine Wachheit des Fahrers gefördert werden. Ferner kann versucht werden, den Fahrer zu überzeugen, eine Pause einzulegen. Beispielsweise kann ihm hierzu eine geeignete Raststätte vorgeschlagen werden. Über eine Eingabeeinheit 26 kann der Benutzer der Schnittstelle 21 beispielsweise über das Internet oder aus einer Datenbasis hierzu ergänzende Informationen abrufen.

Weiterhin ist es auch möglich, das von der zweiten Kommunikationseinrichtung 20 auf das Fahrzeug bezogene Daten, beispielsweise eine Gefahrensituation, die für eine vorgegebenen Zeitraum bestanden hat, an einen weitere externe Einrichtung 27 übertragen werden. Dies kann beispielsweise ein Eigentümer des Kraftfahrzeugs sein, beispielsweise ein Mietwagenanbieter. Die externe Einrichtung 27 kann sowohl außerhalb des Fahrzeugs als auch außerhalb der Dienstezentrale angeordnet sein. Zwischen der zweiten Kommunikationseinrichtung 20 und einer externen Einrichtung 27 außerhalb des Kraftfahrzeugs 1 wird hierzu eine zweite Kommunikationsverbindung 28 aufgebaut, die insbesondere eine Daten-Kommunikationsverbindung darstellt.

Sollte es beispielsweise durch eine Fehlfunktion von Sensoren dazu kommen, dass eine Warnung fälschlicherweise ausgelöst wird, so kann der Fahrer des Kraftfahrzeugs dem Mitarbeiter in der Dienstezentrale an der Schnittstelle 21 seinen Kenntnisstand darlegen. In einer weiteren Ausführungsform besteht die Möglichkeit, dass eine entsprechende Warnschwelle für eine Anzeige einer Warnung durch den Mitarbeiter der Dienstezentrale über die erste Kommunikationsverbindung 19 angepasst wird, in dem ein entsprechend geänderter Datensatz in den Speicher 8 der Steuereinrichtung 2 eingeschrieben wird. Vorzugsweise sollten hierzu Messdaten durch eine Person an der Schnittstelle 21 verifiziert werden. Hierdurch ist es möglich, dass unnötige Warnungen an den Fahrer des Kraftfahrzeugs, die sich aus einer Fehlfunktion von Sensoren oder beispielsweise aus einer Änderung im Straßennetz ergeben, nicht ständig an den Fahrer des Kraftfahrzeugs ausgegeben werden. Ohne ein Aufsuchen einer Werkstatt ist es damit möglich, überflüssige Fehl-Warnungen auf einfache Weise zu beseitigen und damit eine Akzeptanz des Fahrers für ihm angezeigte Warnungen vor tatsächlichen Gefahren zu erhöhen.

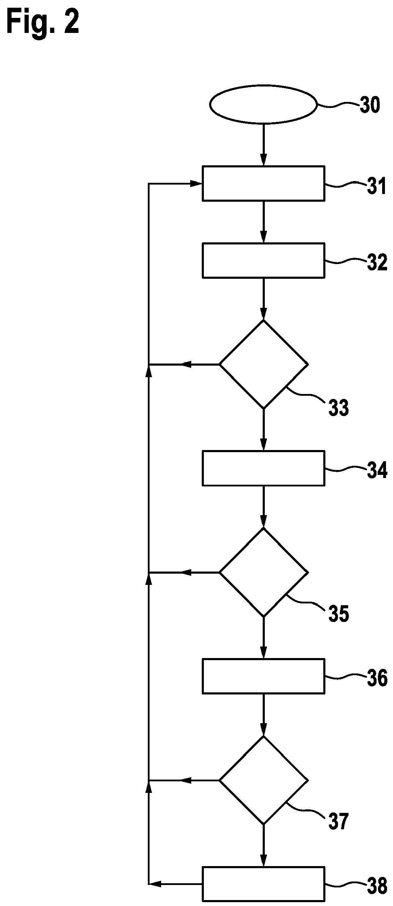

In der Figur 2 ist ein Ablauf eines Fahrerinformationsverfahrens dargestellt. Das Verfahren wird mit einem Initialisierungsschritt 30 begonnen, insbesondere bei einem Starten des Fahrzeug. In einem anschließenden Messschritt 31 misst wenigstens ein Kraftfahrzeugsensor Fahrzeugdaten, wie beispielsweise eine Position des Fahrzeugs, eine Geschwindigkeit des Fahrzeugs, Lenkverhalten des Fahrers oder Messdaten, aus denen sich eine Müdigkeit des Fahrers ermitteln lässt. In einem anschließenden Auswerteschritt 32 werden die verschiedenen Messdaten ausgewertet. Hierbei können Messdaten jeweils für sich ausgewertet werden. Allerdings ist es in einer Ausführungsform auch möglich, in entsprechender Weise verschiedene, zusammenhängende Messdaten, wie beispielsweise Lenkwinkelbewegung und Geschwindigkeit des Fahrzeugs, miteinander zu verknüpfen. In einem anschließenden Prüfschritt 33 wird überprüft, ob eine Gefahrensituation für das Fahrzeug vorliegt. Ist dies nicht der Fall, so wird zu dem Messschritt 31 zurückverwiesen. Wird dagegen festgestellt, dass wenigstens eine Gefahrensituation für das Fahrzeug vorliegt, so wird zu einem Überprüfungsvorgang 34 weiterverzweigt. Für einen vorgegebenen Zeitraum wird dabei überprüft, ob die Gefahrensituation fortbesteht. Der vorgegebene Zeitraum ist vorzugsweise für verschiedene Gefahrensituationen unterschiedlich vorgegeben. Anschließend wird zu einem weiteren Überprüfungsschritt 35 weiterverzweigt. Liegt eine Gefahrensituation nach dem vorgegebenen Zeitraum nicht mehr vor, so wird zu dem Messschritt 31 zurückverzweigt. Besteht die Gefahrensituation fort, so wird zu einem Verbindungsschritt 36 weiterverzweigt und eine Kommunikationsverbindung zu einer Datenzentrale wird aufgebaut. Hierdurch wird eine Kommunikation zwischen dem Fahrer und insbesondere einer Person in einer Datenzentrale über Sprache ermöglicht. Bevorzugt wird die Kommunikationsvorrichtung aufrechterhalten, bis sie entweder von dem Fahrer des Fahrzeugs oder von der Datenzentrale unterbrochen wird. In einem anschließenden dritten Überprüfungsschritt 37 wird überprüft, ob eine Änderung der Schwellwerte für die Festlegung einer Gefahrensituation für die jeweilige Gefahrensituation erforderlich ist. Ist dies nicht der Fall, so wird zu dem Messschritt 31 zurückverzweigt. Ist dies der Fall, so wird insbesondere seitens der Datenzentrale in einem Änderungsschritt 38 eine Änderung eines Schwellwertes für die Festlegung der jeweiligen Gefahrensituation für die jeweiligen Messwerte festgelegt. Die Schritte 37 und 38 sind hierbei optional.

## Patentansprüche

1. Steuereinrichtung (2) für ein Fahrzeug (1) mit einer Schnittstelle (3) zu wenigstens einem Sensor (6, 7) des Fahrzeugs (1) zur Ermittlung von Fahrzeugdaten, mit einer Auswerteeinrichtung (5) zur Auswertung von von dem Sensor (6, 7, 14) erfassten Fahrzeugdaten zur Bestimmung einer Gefahrensituation des Fahrzeugs (1) und mit einer Schnittstelle (9) zu einer Ausgabeeinheit (10, 12) zur Ausgabe einer auf die Gefahrensituation bezogenen Warnung, **gekennzeichnet durch** eine Schnittstelle (17) zu einer ersten Kommunikationseinrichtung (18) im Fahrzeug (1) zum Aufbau einer drahtlosen Kommunikationsverbindung (19) zu einer zweiten Kommunikationseinrichtung (20) außerhalb des Fahrzeugs (1) für den Fall, dass nach einer vorgegebenen Zeit nach Ausgabe der auf die Gefahrensituation bezogenen Warnung ein Fortbestehen der Gefahrensituation von der Auswerteeinrichtung erfasst wird.

2. Steuereinrichtung nach Anspruch 1, **gekennzeichnet durch** eine Schnittstelle (15) zu einer Ortungseinrichtung (16) zur Feststellung einer aktuellen Position des Fahrzeugs (1).

3. Fahrerinformationseinrichtung mit einer Steuervorrichtung nach Anspruch 1, **gekennzeichnet durch** wenigstens einen Sensor zur Bestimmung einer Gefahrensituation des Fahrzeugs.

4. Fahrerinformationseinrichtung nach Anspruch 3, **dadurch gekennzeichnet, dass** der wenigstens eine Sensor (6, 7, 14) ein Drehratensensor, eine Geschwindigkeitsmesseinrichtung, eine Kamera zur Fahrerüberwachung, eine Spurverlassenswarneinrichtung, ein Abstandsmesser, eine Messeinrichtung zur Bestimmung eines Drogenkonsums oder eine Spurhalteüberwachungseinrichtung ist.

5. Fahrerinformationsverfahren, wobei ein Sensor eines Kraftfahrzeugs Fahrzeugdaten ermittelt, wobei die ermittelten Fahrzeugdaten bezüglich einer Gefahrensituation des Fahrzeugs ausgewertet werden, wobei abhängig von der Auswertung eine Warnung an den Fahrer ausgegeben wird, **dadurch gekennzeichnet, dass** eine drahtlose Kommunikationsverbindung zwischen dem Fahrer und einer Einrichtung außerhalb des Fahrzeugs aufgebaut wird, wenn nach einer vorgegebenen Zeit nach Ausgabe der auf die Gefahrensituation bezogenen Warnung ein Fortbestehen der Gefahrensituation erfasst wird.

6. Fahrerinformationsverfahren nach Anspruch 5, **dadurch gekennzeichnet, dass** als eine Gefahrensituation eine Ermüdung des Fahrers, ein drohendes Verlassen einer Fahrspur, eine Überschreitung einer Höchstgeschwindigkeit und/oder eine Benutzung einer gesperrten Fahrspur erfasst werden.

7. Fahrerinformationsverfahren nach einem der Ansprüche 5-6, **dadurch gekennzeichnet, dass** als Kommunikationsverbindung eine Sprachverbindung zwischen dem Fahrer und einer Person außerhalb des Fahrzeugs aufgebaut wird.

8. Fahrerinformationsverfahren nach einem der Ansprüche 5-7, **dadurch gekennzeichnet, dass** von dem wenigstens einen Sensor gemessene Daten und/oder ein Ergebnis der Auswertung der gemessenen Daten an eine Dienstezentrale außerhalb des Fahrzeugs übertragen werden.

9. Fahrerinformationsverfahren nach Anspruch 8, **dadurch gekennzeichnet, dass** von der Zentraleinheit von dem wenigstens einen Sensor gemessene Daten und/oder ein Ergebnis der Auswertung der gemessenen Daten und/oder hierauf bezogene Daten an eine Recheneinrichtung außerhalb der Dienstezentrale übertragen werden.

10. Fahrerinformationsverfahren nach einem der Ansprüche 8-9, **dadurch gekennzeichnet, dass** Daten für die Auswertung der Gefahrensituation des Fahrzeugs von der Dienstezentrale an das Fahrzeug übertragen werden.
